# EUROPEAN PATENT APPLICATION

(11) **EP 3 852 325 A1**
(43) Date of publication of application: **21.07.2021**
(21) Application number: 18933131.7
(22) Date of filing: 13.09.2018
(51) Int. Cl.: H04L 27/26

(54) **USER APPARATUS AND BASE STATION APPARATUS**

(71) Applicant: NTT DoCoMo, Inc., Tokyo 100-6150 (JP)
(72) Inventor: OSAWA, Ryosuke, Tokyo 100-6150 (JP); OHARA, Tomoya, Tokyo 100-6150 (JP)
(74) Representative: Hoffmann Eitle
(86) International application number: PCT/JP2018/034085
(87) International publication number: WO 2020/054044

(57) **Abstract**

A user equipment includes a transmitting unit that transmits information related to one or more synchronization sources available for terminal-to-terminal direct communication to a base station device, a receiving unit that receives information indicating a group and a synchronization source based on the information related to the one or more synchronization sources from the base station device, and a control unit that executes the terminal-to-terminal direct communication in the received group using the received synchronization source.

## Description

### TECHNICAL FIELD

The present invention relates to a user equipment and a base station device in a wireless communication system.

### BACKGROUND ART

In Long Term Evolution (LTE), successor systems of LTE (for example, LTE-Advanced (LTE-A), and New Radio (NR) (also called 5G)), device to device (D2D) technology in which user equipments perform communication directly with each other without going through a base station device is under review (for example, Non-Patent Document 1).

In D2D, it is possible to reduce traffic between a user equipment and a base station device, and communication between user equipments can be performed even when a base station device is unable to perform communication in the event of a disaster or the like. In 3rd Generation Partnership Project (3GPP), D2D is called "sidelink," but D2D which is a more general term is used in this specification. However, in the description of an embodiment to be described later, a sidelink is also used if necessary.

D2D communication is roughly classified into D2D discovery for discovering other equipments which are capable of performing communication and D2D communication (also referred to as "D2D direct communication") in which direct communication between user equipments is performed. Hereinafter, when D2D communication, D2D discovery, and the like are not particularly distinguished, they are referred to simply as D2D. A signal transmitted and received by D2D is referred to as a D2D signal. In NR, various use cases of services related to vehicle to everything (V2X) are under review (for example, Non-Patent Document 2).

### CITATION LIST

### NON-PATENT DOCUMENT

Non-Patent Document 1: 3GPP TS 36.211 V15.2.0 (2018-06)
Non-Patent Document 2: 3GPP TR 22.886 V15.1.0 (2017-03)

### SUMMARY OF THE INVENTION

### PROBLEM TO BE SOLVED BY THE INVENTION

In a case in which a plurality of user equipments performing D2D communication form a group, when synchronization sources of a global navigation satellite system (GNSS), a base station, a user equipment, and the like used between user equipments do not coincide, the D2D communication is likely to have a problem.

The present invention was made in light of the foregoing, and it is an object of the present invention to enable a plurality of user equipments to select an appropriate synchronization source and form a group in the terminal-to-terminal direct communication.

### MEANS FOR SOLVING PROBLEM

According to the technology of the disclosure, provided is a user equipment including a transmitting unit that transmits information related to one or more synchronization sources available for terminal-to-terminal direct communication to a base station device, a receiving unit that receives information indicating a group and a synchronization source based on the information related to the one or more synchronization sources from the base station device, and a control unit that executes the terminal-to-terminal direct communication in the received group using the received synchronization source.

### EFFECT OF THE INVENTION

According to the technology of the disclosure, a plurality of user equipments can select an appropriate synchronization source and form a group in the terminal-to-terminal direct communication.

### BRIEF DESCRIPTION OF DRAWINGS

Fig. 1 is a diagram for describing V2X;
Fig. 2 is a diagram for describing an example of a wireless communication system in an embodiment of the present invention;
Fig. 3 is a diagram for describing an example of a group in an embodiment of the present invention;
Fig. 4 is a sequence diagram for describing an example of an operation of a wireless communication system in an embodiment of the present invention;
Fig. 5 is a flowchart for describing an example (1) of an operation of a user equipment in an embodiment of the present invention;
Fig. 6 is a flowchart for describing an example (2) of an operation of a user equipment operation in an embodiment of the present invention;
Fig. 7 is a diagram illustrating an example of a functional configuration of a base station apparatus 10 in an embodiment of the present invention;
Fig. 8 is a diagram illustrating an example of a functional configuration of a user equipment 20 in an embodiment of the present invention; and
Fig. 9 is a diagram illustrating an example of a hardware configuration of a base station apparatus 10 or a user equipment 20 in an embodiment of the present invention.

### MODE(S) FOR CARRYING OUT THE INVENTION

Hereinafter, an embodiment of the present invention will be described with reference to the appended drawings. Note that the following is an example, and an embodiment to which the present invention is applied are not limited to the following embodiment.

In an operation of a wireless communication system of an embodiment of the present invention, existing technology is appropriately used. Here, the existing technology is, for example, existing LTE but not limited to existing LTE. Further, the term "LTE" used in this specification shall have a broad meaning including LTE-Advanced and a scheme subsequent to LTE-Advanced (for example, NR), or a wireless local area network (LAN) unless otherwise configured forth herein.

In an embodiment of the present invention, a duplex scheme may be a time division duplex (TDD) scheme, a frequency division duplex (FDD) scheme, or any other scheme (for example, a flexible duplex or the like).

In the following description, a method of transmitting a signal using a transmission beam may be digital beam forming of transmitting a signal (pre-coded with a pre-coding vector) multiplied by a pre-coding vector or may be analog beam forming for realizing beam forming using a variable phase shifter in a radio frequency (RF) circuit. Similarly, a method of receiving a signal using a reception beam may be digital beam forming of multiplying a received signal by a predetermined weight vector or may be analog beam forming of realizing beam forming using a variable phase shifter in a RF circuit. Hybrid beam forming in which digital beam forming and analog beam forming are combined may be applied to at least one of transmission and reception. Further, transmitting a signal using a transmission beam may be transmitting a signal through a specific antenna port. Similarly, receiving a signal using a reception beam may be receiving a signal through a particular antenna port. An "antenna port" refers to a logical antenna port or a physical antenna port defined in the 3GPP standard. In addition, a precoding or the beam forming is also referred to as a "pre-coder" or a "spatial domain filter."

A method of forming the transmission beam and the reception beam is not limited to the above method. For example, in the base station device 10 and the user equipment 20 having a plurality of antennas included in the wireless communication system of an embodiment of the present invention, a method of changing an angle of each antenna may be used, a method in which a method using a precoding vector and a method of changing an angle of an antenna are combined may be used, a method of switching and using different antenna panels may be used, a method of using a combination of a plurality of antenna panels may be used, or any other method may be used. Further, for example, a plurality of different transmission beams may be used in a high frequency band. Using a plurality of transmission beams is referred to as a multi-beam operation, and using a single transmission beam is used is referred to as a single beam operation.

Further, in an embodiment of the present invention, when a wireless parameter or the like is configured, it may mean that a predetermined value is "pre-configured" or it may mean that a wireless parameter notified from the base station device 10 or the user equipment 20 is configured.

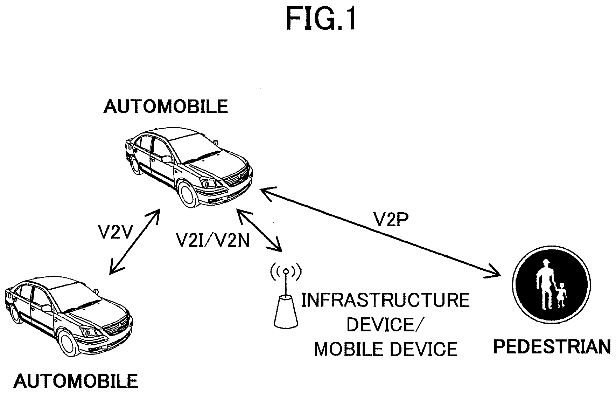

Fig. 1 is a diagram for describing V2X. In 3GPP, implementing vehicle to everything (V2X) or enhanced V2X (eV2X) by extending a D2D function is under review, and specifications thereof is in progress. As illustrated in Fig. 1, V2X is a part of intelligent transport systems (ITS) and is a generic term of vehicle to vehicle (V2V) meaning a communication form performed between automobiles, vehicle to infrastructure (V2I) meaning a communication form performed between an automobile and a road-side unit (RSU) installed on a road side, vehicle to nomadic device (V2N) meaning a communication mode performed between an automobile and a mobile terminal carried by a driver, and vehicle to pedestrian (V2P) meaning a communication mode performed between an automobile and a mobile terminal carried by a pedestrian.

In 3GPP, V2X using cellular communication and inter-terminal communication of LTE or NR is being studied. For V2X of LTE or NR, review not limited to 3GPP specification is expected to be conducted from now. For example, cost reduction by securing of interoperability and implementing of an upper layer, a combining or switching method of a plurality of radio access technologies (RATs), regulation response in each country, and data acquisition, delivery, database management, and use method of V2X platform of LTE or NR are expected to be under review.

In an embodiment of the present invention, a form in which the communication device is installed on a vehicle is mainly assumed, but the embodiment of the present invention is not limited to this form. For example, the communication device may be a terminal carried by a person, the communication device may be a device installed in a drone or an aircraft, and the communication device may be a base station, an RSU, a relay station (relay node), a user equipment having a scheduling capability, or the like.

Note that sidelink (SL) may be distinguished from uplink (UL) or downlink (DL) on the basis of one of the following 1) to 4) or a combination thereof. Further, SL may have any other name.
1) A resource arrangement in a time domain
2) A resource arrangement in a frequency domain
3) A synchronization signal to be referred to (including a sidelink synchronization signal (SLSS))
4) A reference signal used for path loss measurement for transmission power control

Further, for orthogonal frequency division multiplexing (OFDM) of SL or UL, any one of cyclic-prefix OFDM (CP-OFDM), discrete Fourier transform-spread-OFDM (DFT-S-OFDM), non-transform pre-coded OFDM, and transform pre-coded OFDM may be applied.

In SL of LTE, Mode 3 and Mode 4 are specified for SL resource allocation to the user equipment 20. In Mode 3, transmission resources are dynamically allocated in accordance with downlink control information (DCI) transmitted from the base station device 10 to the user equipment 20. In Mode 3, semi persistent scheduling (SPS) can be performed as well. In Mode 4, the user equipment 20 autonomously selects transmission resources from a resource pool.

A slot in an embodiment of the present invention may be replaced with a mini slot, a sub frame, a radio frame, a transmission time interval (TTI), or the like. Further, a cell in an embodiment of the present invention may be replaced with a cell group, a carrier, a carrier component, a BWP, a resource pool, a resource, a Radio Access Technology (RAT), or a system (including a wireless LAN) .

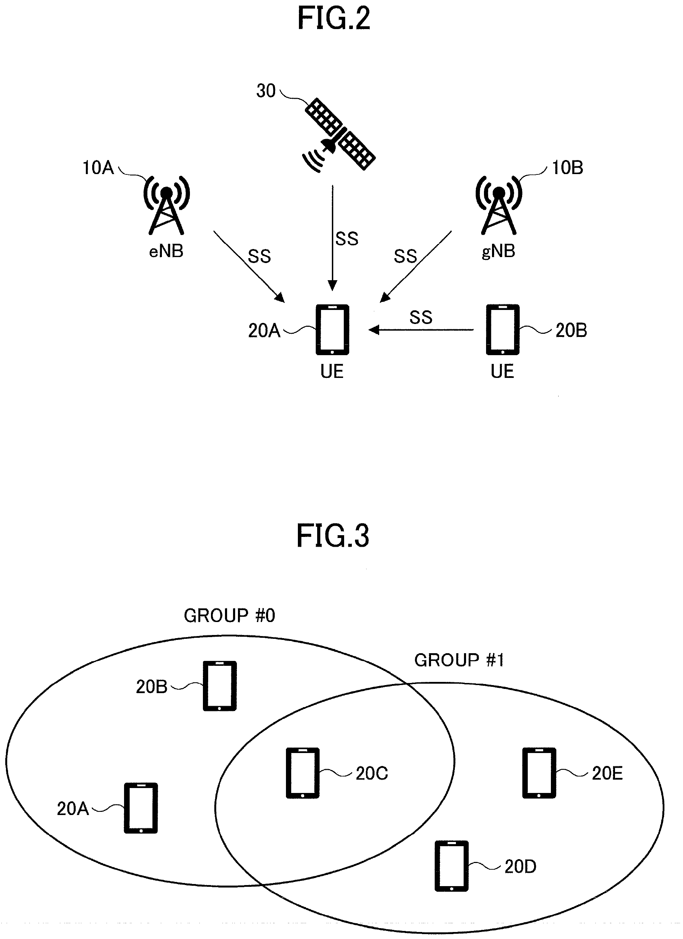

Fig. 2 is a diagram for describing an example of a wireless communication system in an embodiment of the present invention. As illustrated in Fig. 2, the wireless communication system in an embodiment of the present invention includes a base station apparatus 10A which is an enhanced Node B (eNB), a base station apparatus 10B which is a next generation Node B (a gNB), a user equipment 20A, a user equipment 20B, and a navigation satellite 30.

The base station device 10 communicates with the user equipment 20 via a radio bearer established between the base station device 10 and the user equipment 20. The base station device 10 is also referred to as an eNB, a gNB, a new radio (NR) node, or the like.

The user equipment 20 may be any one of a terminal installed in a vehicle, a terminal (a mobile broad band (MBB) terminal) that frequently transmits and receives a large amount of data such as a smartphone, a terminal that transmits and receives a small amount of data at a low frequency such as an IoT device (a machine type communication (MTC) terminal), or the like. In an embodiment of the present invention embodiment, the user equipment 20 includes all types (UE categories) of user equipments 20. The user equipment 20 communicates with the base station device 10 or the user equipment 20.

The navigation satellite 30 is a navigation satellite included in a satellite positioning system such as a Global Navigation Satellite System (GNSS). A plurality of navigation satellites 30 including the navigation satellite 30 (not illustrated) transmits navigation signals to the ground. A device that performs positioning acquires positioning information from the navigation signals.

In NR-SL, it is under review that a source of a synchronization signal (SS) (hereinafter also referred to as "synchronization source") supports a GNSS, a gNB, an eNB, a NR-user equipment (UE), and LTE-UE. In LTE, the priority order is specified for the synchronization source to be used. The priority order is, for example, 1: GNSS, 2: UE directly synchronized with a GNSS and UE directly synchronized with an eNB, 3: UE indirectly synchronized with a GNSS and UE indirectly synchronized with an eNB, and 4: other UEs. Further, for example, the priority order is 1: UE directly synchronized with an eNB, 2: UE indirectly synchronized with an eNB, 3: GNSS, 4: UE directly synchronized with a GNSS, 5: UE indirectly synchronized with a GNSS, and 6: other UEs.

Further, in NR-SL, a group cast is under review. A group includes a plurality of user equipments 20. The group cast refers to transmission to a plurality of user equipments 20 using a group ID. The group may be autonomously formed by the user equipments 20 or may be formed under the control of the base station device 10 or the like.

Fig. 3 is a diagram for describing an example of the group in an embodiment of the present invention. As illustrated in Fig. 3, a group #0 includes a user equipment 20A, a user equipment 20B, and a user equipment 20C. A group #1 includes the user equipment 20C, a user equipment 20D, and a user equipment 20E. The user equipment 20C belongs to the group #0 and the group #1.

Here, in a case in which the same synchronization source is not used in the user equipments 20 constituting the group, it becomes difficult to perform accurate synchronization between the user equipments 20. For example, following the priority order of the synchronization source of LTE, different synchronization sources may be selected among the user equipments 20 constituting the group, and the synchronization sources in the group may not coincide. Further, in a case in which the user equipment 20 belongs to a plurality of groups as in the user equipment 20C, transmission/reception timings may be restricted when synchronization is made in each group.

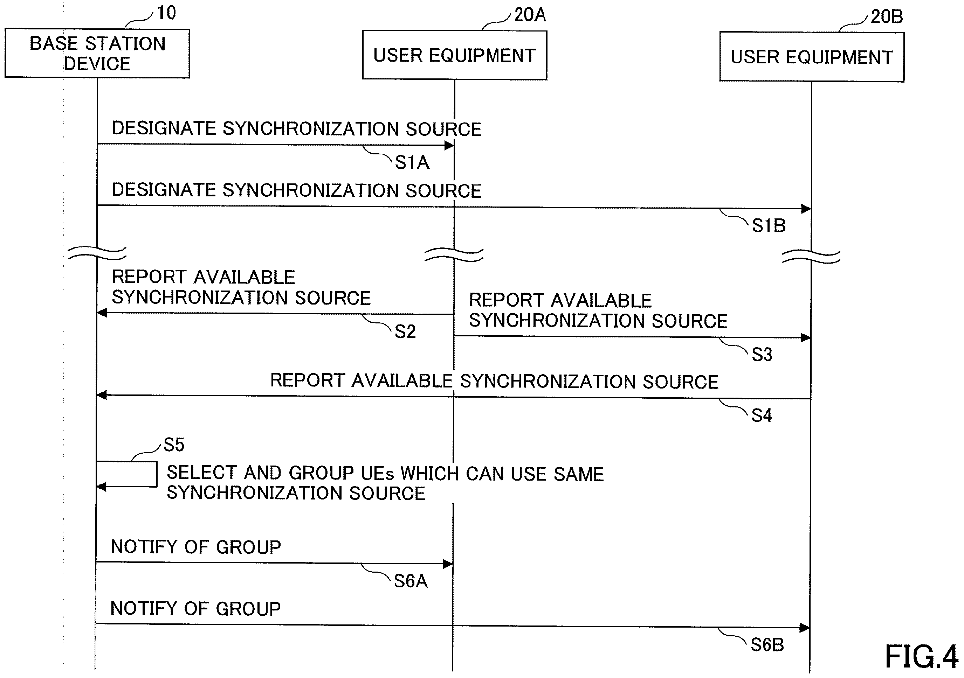

Fig. 4 is a sequence diagram for describing an example of an operation of the wireless communication system in an embodiment of the present invention. At time points of step S1A and S1B, it is assumed that the user equipment 20A and the user equipment 20B belong to the same group. In steps S1A and S1B, the base station device 10 designates the user equipment 20A and the user equipment 20B belonging to the same group as the synchronization source. Any of step S1A or S1B may be executed first. The base station device 10 may be a gNB or an eNB. The base station device 10 designates the user equipment 20 as the synchronization source to be used for each group. The designation may be transmitted using any one signal of radio resource control (RRC) signaling, media access control (MAC) signaling, downlink control information (DCI), and sidelink control information (SCI). Further, the designation may be transmitted through any one channel of a physical broadcast channel (PBCH), a physical downlink control channel (PDCCH), a physical downlink shared channel (PDSCH), a physical sidelink broadcast channel (PSBCH), a physical sidelink discovery channel (PSDCH), a physical sidelink shared channel (PSSCH), and a physical sidelink control channel (PSCCH). Further, the designation may be masked with a cell specific radio network temporary identifier (RNTI), a UE group common RNTI, a UE group specific RNTI, a UE common RNTI, or a UE specific RNTI depending on a transmission target.

In steps S1A and S1B, for example, any one of the GNSS, the gNB, the eNB, the NR-UE, and the LTE-UE may be designated as the synchronization source. The UE designated as the synchronization source includes a UE having a scheduling function. The UE having the scheduling function is a user equipment 2 which can determine at least one of a Modulation and Coding Scheme (MCS), a Transport block size (TBS), rank, the number of ranks or transmission layers, a resource arrangement, transmission power, and transmission timing autonomously or on the basis of an instruction from the base station device 10 and notify of them. Further, the UE designated as the synchronization source may be a user equipment 20 in the group to which the user equipment 20A and the user equipment 20B belong. As a synchronization source, a plurality of candidate UEs and a priority order may be specified. Further, the synchronization source may be designated for each SL resource. Further, the synchronization source may be designated for each numerology, each subcarrier spacing, each bandwidth part (BWP), or each frequency range (FR). For example, in FR1, the synchronization source and the priority order similar to those in LTE may be designated.

In the user equipment 20, a default synchronization source and priority order may be designated in the specifications when there is no explicit designation from the base station device 10 or when the designated synchronization source is unable to be used. For example, the priority order may be specified in advance like GNSS > gNB or eNB > UE having scheduling function > other UEs.

At a time point of step S2, it is assumed that the user equipment 20A and the user equipment 20B do not belong to the same group. In step S2, the user equipment 20A may report an available synchronization source to the base station device 10. Further, in step S3, the user equipment 20A may report an available synchronization source to the user equipment 20B. Further, in step S4, the user equipment 20B may report an available synchronization source to the base station device 10. In other words, the user equipment 20 may report the available synchronization source to at least one of the base station device 10 and the nearby user equipment 20. The report may be transmitted using any signal of RRC signaling, MAC signaling, uplink control information (UCI), and SCI. Further, the report may be transmitted through any one channel of a PSBCH, a PSDCH, a PSSCH, a PSCCH, a Physical Uplink Control Channel (PUCCH), and a Physical Uplink Shared Channel (PUSCH). In addition to the available synchronization source, the user equipment 20 may also notify of at least one of a measured reception strength or a reception quality of the synchronization source and a timing difference between the synchronization sources. Examples of the reception strength and the reception quality include a reference signal received power (RSRP), a reference signal received quality (RSRQ), a received signal strength indicator (RSSI), and a signal to interference plus noise ratio (SINR).

In step S5, the base station device 10 may select UEs which can use the same synchronization source and group them. The base station device 10 may perform grouping in step S5 on the basis of the available synchronization source of the user equipment 20A and the user equipment 20B acquired in steps S2 and S4. When the user equipment 20A and the user equipment 20B are grouped in step S5, in steps S6A and S6B, a notification indicating information indicating the group and the synchronization source to be used is given to the user equipment 20A and the user equipment 20B. The user equipment 20A and the user equipment 20B constitute the notified group and execute the SL communication using the notified synchronization source.

In step S5, when a timing difference between one of the available synchronization sources of the user equipment 20 and the synchronization to be used in the group is within an allowable value even although the available synchronization source of the user equipment 20 is different from the synchronization source used in the group, they may be regarded as the same synchronization source, and the user equipment 20 may be added to the group. The allowable value of the timing difference may be specified in the specification, or the base station device 10 may notify the user equipment 20 of the allowable value of the timing difference using the RRC signaling, the MAC signaling, the DCI, or the like. Further, the allowable value of the timing difference may be transmitted via any one channel of the PBCH, the PDCCH, or the PDSCH. Further, the allowable value of the timing difference may be configured or specified in advance for each numerology, each sub carrier interval, or each FR.

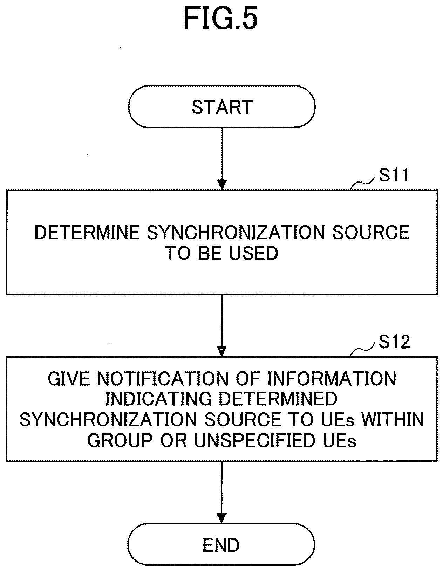

Fig. 5 is a flowchart for describing an example (1) of an operation of the user equipment in an embodiment of the present invention. An example of an operation in which the user equipment 20 autonomously determines the synchronization source will be described with reference to Fig. 5. In step S11, the user equipment 20 determines the synchronization source to be used. The determination of the synchronization source to be used may be performed on the basis of a reception strength or reception quality (the RSRP, the RSRQ, the RSSI, the SINR, or the like) of the synchronization signal. For example, a synchronization source of the best reception strength or the best reception quality may be selected. Further, a threshold value related to the reception strength or the reception quality used for the selection of the synchronization source may be specified in the specification, the base station device 10 notifies the user equipment 20 of the threshold value related to the reception strength or the reception quality using the RRC signaling, the MAC signaling, the DCI, or the like. For example, it may be selected from the synchronization source of the reception strength or the reception quality of the threshold value or more. Then, in step S12, the user equipment 20 notifies each user equipment 20 in the group of information indicating the synchronization source determined by the group cast. Alternatively, the user equipment 20 may notify unspecified user equipments 20 of the information indicating the determined synchronization source.

The notification may be transmitted using any one signal of the RRC signaling, the MAC signaling, the UCI, the SCI. Further, the notification may be transmitted via any one channel of a PSBCH, a PSDCH, a PSSCH, a PSCCH, a PUCCH, and a PUSCH. When the notification is the group cast, it may be masked with the UE group specific RNTI. Further, information indicating the determined synchronization source may be notified for each numerology, each sub carrier interval, each BWP, each FR, each SL resource, or each cell.

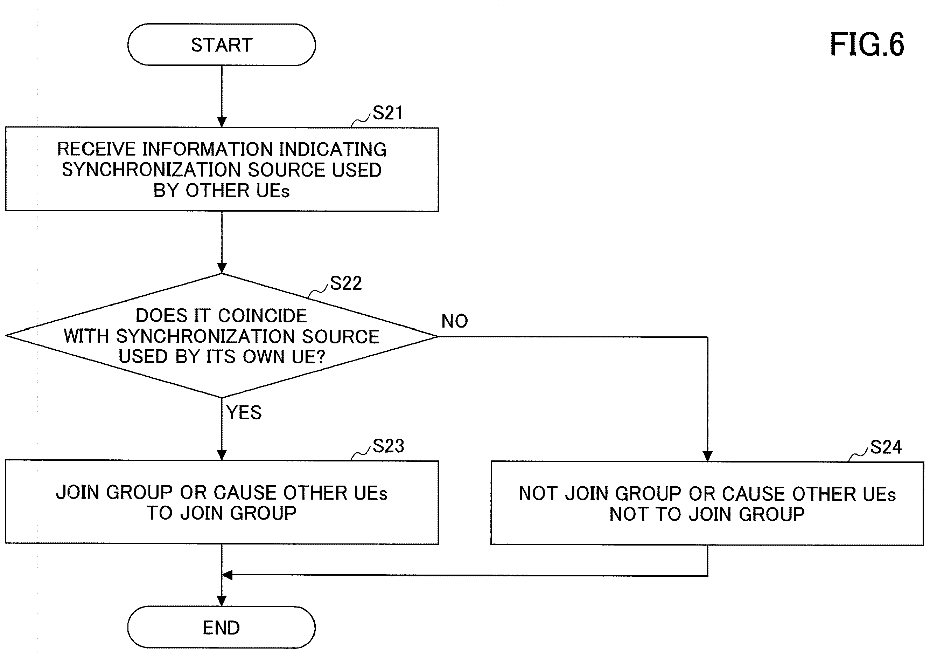

Fig. 6 is a flowchart for describing an example (2) of an operation of the user equipment in an embodiment of the present invention. An example in which the user equipment 20 autonomously forms or changes the group will be described with reference to Fig. 6. In step S21, the user equipment 20 receives the information indicating the synchronization sources used by other user equipments 20. Then, the user equipment 20 determines whether or not the synchronization sources used by other user equipments 20 coincide with either the synchronization sources used by its own device or the available synchronization source. When the synchronization sources coincide (YES in S22), the process proceeds to step S23, and when the synchronization sources do not coincide (NO in S22), the process proceeds to step S24.

In step S23, the user equipment 20 joins a group to which the other user equipments 20 belong or causes other user equipments 20 to join the group to which its own device belongs, and ends the flow. In step S24, the user equipment 20 does not join the group to which the other user equipments 20 belong or causes other user equipments 20 not to join the group to which its own device belongs, and ends the flow.

Even although the synchronization sources of the other user equipments 20 are different from the synchronization source of its own device in step S22, when the timing difference between the synchronization sources of the other user equipments 20 and the synchronization source of its own device is within the allowable value, they may be regarded as the same synchronization source, and the user equipment 20 may join the group or add the other user equipments 20 to the group to which its own device belongs. The allowable value of the timing difference may be specified in the specification, or the base station device 10 may notify the user equipment 20 of the allowable value of the timing difference using the RRC signaling, the MAC signaling, the DCI, or the like. Further, the allowable value of the timing difference may be transmitted via any one channel of a PBCH, a PDCCH, or a PDSCH. Further, the allowable value of the timing difference may be configured or specified in advance for each numerology, each sub carrier interval, or each FR.

The operation of the user equipment 20 between a plurality of groups will be described below. When the user equipment 20 belongs to a plurality of groups, the associated groups may be limited to only groups using the same synchronization source. The base station device 10 may notify the user equipment 20 of information indicating the group or the user equipment 20 which uses the same synchronization source. For example, a notification of an ID of the group or the user equipment 20 which uses the same synchronization source may be given to a certain group or user equipment 20 in a form of a list, or a notification of an ID of the group or the user equipment 20 that uses a synchronization source may be given for each synchronization source. The notification may be executed in response to a request which is transmitted by the user equipment 20 through the RRC signaling, the MAC signaling, the SCI, the UCI, or the like.

The user equipment 20 may determine whether to join the group on the basis of the notification. Even though the synchronization source used by or available to the user equipment 20 is different from the synchronization source related to the list included in the notification, when the timing difference between the synchronization source of the user equipment 20 and the synchronization related to the list included in the notification is within the allowable value, the synchronization sources are regarded as the same synchronization source, and it may be determined to join the group. The allowable value of the timing difference may be specified in the specification, or the base station device 10 may notify the user equipment 20 of the allowable value of the timing difference using the RRC signaling, the MAC signaling, the DCI, or the like. Further, the allowable value of the timing difference may be transmitted via any one channel of the PBCH, the PDCCH, or the PDSCH. Further, the allowable value of the timing difference may be configured or specified in advance for each numerology, each sub carrier interval, or each FR.

In an embodiment of the present invention, the "synchronization source" refers to a type of device that transmits the synchronization signal necessary for SL transmission/reception such as a GNSS, a gNB, an eNB, an NR-UE, an LTE-UE, or the like. The synchronization signal is, for example, a primary sidelink synchronization signal (PSSS) or a secondary sidelink synchronization signal (SSSS). Further, even though the types of devices are identical to each other, when the devices can be identified by IDs or the like, they may be regarded as different synchronization sources. The devices which can be distinguished by IDs or the like are, for example, gNBs, eNBs, or UEs.

Further, in an embodiment of the present invention, the timing difference of the synchronization signal refers to a difference between a position detected using a synchronization signal transmitted by another synchronization source and a position (for example, a start position) of at least one of a radio frame, a subframe, a slot, a mini slot, and a symbol, in the time domain, detected using a synchronization signal transmitted by a certain synchronization source.

Further, in an embodiment of the present invention, an operation in a case in which the user equipments 20 are not grouped may be included. For example, the designation or specifying of the synchronization source, the reporting or notification of an available synchronization source, or the like can be applied even when the user equipments 20 are not grouped.

According to the above-described embodiment, the user equipment 20 can select an appropriate synchronization source within a group and form a group. Further, when the user equipment 20 is not participating in the group, the user equipment 20 can join the group using a synchronization source available to its own device. Further, when the user equipment 20 is participating in the group, the user equipment 20 can cause other user equipments 20 to join the group using the synchronization sources used by other user equipments 20.

In other words, a plurality of user equipments can select an appropriate synchronization source and form a group in the terminal-to-terminal direct communication.

### (Device configuration)

Next, a functional configuration example of each of the base station device 10 and the user equipment 20 that execute the processes and the operation described so far will be described. Each of the base station device 10 and the user equipment 20 has the function of implementing the embodiment. Here, each of the base station device 10 and the user equipment 20 may have only some of the functions in the embodiment.

### <Base station device 10>

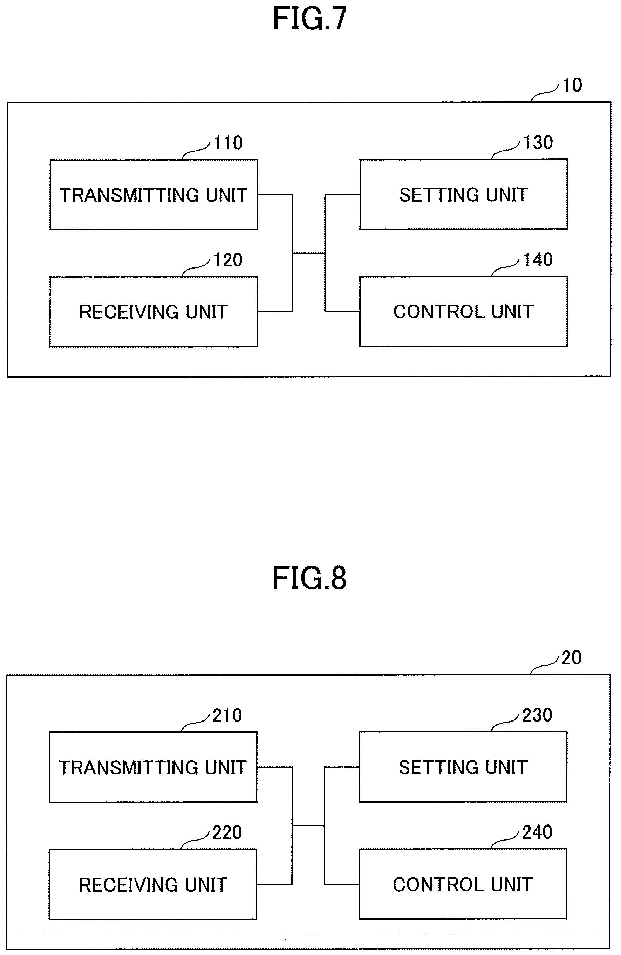

Fig. 7 is a diagram illustrating an example of a functional configuration of the base station device 10. As illustrated in Fig. 7, the base station device 10 has a transmitting unit 110, a receiving unit 120, a setting unit 130, and a control unit 140. The functional configuration illustrated in Fig. 7 is merely an example. As long as the operation according to an embodiment of the present invention can be executed, the function classification and the name of the function unit are not consequential.

The transmitting unit 110 has a function of generating a signal to be transmitted to the user equipment 20 and transmitting the signal wirelessly. The receiving unit 120 has a function of receiving various types of signals transmitted from the user equipment 20 and acquiring, for example, information of a higher layer from the received signals. The transmitting unit 110 has a function of transmitting the NR-PSS, the NR-SSS, the NR-PBCH, the DL/UL control signal, the DL reference signal, or the like to the user equipment 20.

The setting unit 130 stores pre-configured configuration information and various types of configuration information to be transmitted to the user equipment 20 in the storage device and reads the configuration information from the storage device if necessary. For example, content of the configuration information is, for example, information related to a configuration of the D2D communication or the like.

As described in the embodiment, the control unit 140 performs a process related to the configuration used for the user equipment 20 to perform the D2D communication. Further, the control unit 140 performs a process related to grouping of D2D communication corresponding to the synchronization source. The control unit 140 transmits the scheduling of the D2D communication to the user equipment 20 via the transmitting unit 110. A functional unit related to signal transmission in the control unit 140 may be included in the transmitting unit 110, and a functional unit related to signal reception in the control unit 140 may be included in the receiving unit 120.

### <User equipment 20>

Fig. 8 is a diagram illustrating an example of a functional configuration of the user equipment 20. As illustrated in Fig. 8, the user equipment 20 has a transmitting unit 210, a receiving unit 220, a setting unit 230, and a control unit 240. The functional configuration illustrated in Fig. 8 is merely an example. As long as the operation according to an embodiment of the present invention can be executed, the function classification and the name of the function unit are not consequential.

The transmitting unit 210 generates a transmission signal from transmission data and transmits the transmission signal wirelessly. The receiving unit 220 wirelessly receives various types of signals, and acquires a signal of a higher layer from a received signal of a physical layer. The receiving unit 220 also has a function of receiving the NR-PSS, the NR-SSS, the NR-PBCH, the DL/UL/SL control signal, the reference signal, or the like transmitted from the base station device 10. Further, for example, the transmitting unit 210 may transmit a physical sidelink control channel (PSCCH), a physical sidelink shared channel (PSSCH), a physical sidelink discovery channel (PSDCH), a physical sidelink broadcast channel (PSBCH), and the like to other user equipments 20 as the D2D communication, and the receiving unit 220 receives the PSCCH, the PSSCH, the PSDCH, the PSBCH, and the like from other user equipments 20.

The setting unit 230 stores various types of configuration information received from the base station device 10 or the user equipment 20 through the receiving unit 220 in the storage device and reads the configuration information from the storage device if necessary. The setting unit 230 also stores pre-configured configuration information. For example, content of the configuration information is, for example, information related to the configuration of the D2D communication or the like.

The control unit 240 controls the D2D communication with other user equipments 20 as described in the embodiment. Further, the control unit 240 performs a process related to grouping of D2D communication corresponding to the synchronization source. Further, the control unit 240 may execute the scheduling of the D2D communication. A functional unit related to signal transmission in the control unit 240 may be included in the transmitting unit 210, and a functional unit related to signal reception in the control unit 240 may be included in the receiving unit 220.

### (Hardware Configuration)

In the block diagrams (Figs. 7 and 8) used for the description of the above embodiment, the blocks of the functional units are illustrated. The functional blocks (configuring units) are implemented by at least an arbitrary combination of hardware and/or software. A method of implementing each functional block is not particularly limited. In other words, each functional block may be implemented by one device in which a plurality of elements are physically and/or logically combined or may be implemented by a plurality of devices, that is, two or more devices which are physically and/or logically separated and are directly and/or indirectly connected (for example, in a wired and/or wireless manner or the like). The function block may be realized by combining software with one device or a plurality of devices.

The functions include determining, deciding, judging, computing, calculating, processing, deriving, investigating, searching, confirming, receiving, transmitting, outputting, accessing, resolving, selecting, choosing, establishing, comparing, assuming, expecting, regarding, broadcasting, notifying, communicating, forwarding, configuring, reconfiguring, allocating, mapping, assigning, and the like but are not limited thereto. For example, a functional block (configuring unit) that causes transmission to function is referred to as a transmitting unit or a transmitter. In any case, as described above, an implementation method is not particularly limited.

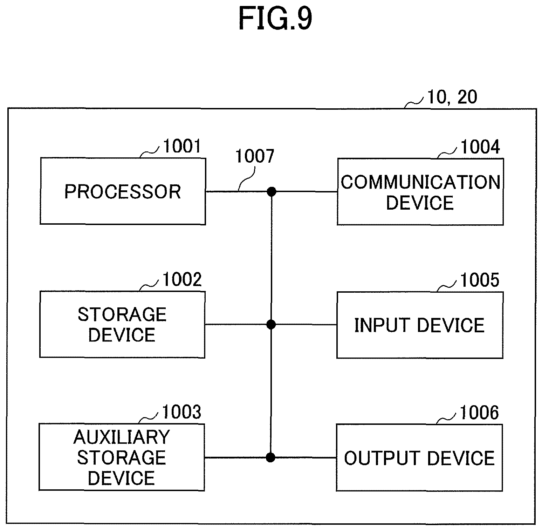

For example, the base station device 10, the user equipment 20, or the like in one embodiment of the present disclosure may function as a computer for processing the present disclosure's wireless communication method. Fig. 9 is a diagram illustrating an example of a hardware configuration of the base station device 10 and the user equipment 20 according to an embodiment of the present disclosure. Each of the base station device 10 and the user equipment 20 may be physically configured as a computer device including a processor 1001, a storage device 1002, an auxiliary storage device 1003, a communication device 1004, an input device 1005, an output device 1006, a bus 1007, and the like.

In the following description, the term "device" can be read as a circuit, device, unit, or the like. The hardware configuration of each of the base station device 10 and the user equipment 20 may be configured to include one or more devices illustrated in the drawing or may be configured without including some devices.

Each function in each of the base station device 10 and the user equipment 20 is implemented such that predetermined software (program) is read on hardware such as the processor 1001 and the storage device 1002, and the processor 1001 performs an operation and controls communication by the communication device 1004 and reading and/or writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like. For example, the control unit 140, the control unit 240, and the like described above may be implemented by the processor 1001.

Further, the processor 1001 reads a program (program code), a software module, or data from at least one of the auxiliary storage device 1003 and/or the communication device 1004 out to the storage device 1002, and executes various types of processes according to them. A program causing a computer to execute at least some of the operations described in the above embodiment is used as the program. For example, the control unit 140 of the base station device 10 illustrated in Fig. 7 may be implemented by a control program which is stored in the storage device 1002 and operates on the processor 1001. Further, for example, the control unit 240 of the user equipment 20 illustrated in Fig. 8 may be implemented by a control program which is stored in the storage device 1002 and operates on the processor 1001. Various types of processes have been described as being performed by one processor 1001 but may be performed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The auxiliary storage device 1003 is also referred to as an "auxiliary storage device." The storage medium may be, for example, a database, a server, or any other appropriate medium including at least one of the storage device 1002 and the auxiliary storage device 1003.

The communication device 1004 is hardware (a transceiving device) for performing communication between computers via at least one of a wired network and a wireless network and is also referred to as a "network device," a "network controller," a "network card," a "communication module," or the like. The communication device 1004 may include a high-frequency switch, a duplexer, a filter, a frequency synthesizer, or the like in order to implement at least one of frequency division duplex (FDD) and time division duplex (TDD). For example, a transceiving antenna, an amplifying unit, a transmitting/receiving unit, a transmission line interface, or the like may be implemented by the communication device 1004. The transmitting/receiving unit may be implemented by to be physically or logically separated by a transmitting unit and a receiving unit.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integratedly configured (for example, a touch panel).

The respective devices such as the processor 1001 and the storage device 1002 are connected via the bus 1007 to communicate information with each other. The bus 1007 may be configured with a single bus or may be configured with different buses between the devices.

Further, each of the base station device 10 and the user equipment 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented using at least one of these pieces of hardware.

### (Conclusion of embodiment)

As described above, according to an embodiment of the present invention, provided is a user equipment including a transmitting unit that transmits information related to one or more synchronization sources available for D2D direct communication to a base station device, a receiving unit that receives information indicating a group and a synchronization source based on the information related to the one or more synchronization sources from the base station device, and a control unit that executes the D2D direct communication in the received group using the received synchronization source.

With the above configuration, the user equipment 20 can select an appropriate synchronization source within a group and form a group. In other words, a plurality of user equipments can select an appropriate synchronization source and form a group in the D2D direct communication.

The information related to the one or more synchronization sources may include a reception strength or a reception quality of the synchronization source or a timing difference between the synchronization sources. With this configuration, the user equipment 20 can select an appropriate synchronization source by reporting the reception strength or the reception quality. Further, the user equipment 20 can perform flexible form a group since types of synchronization source available to a group are increased.

When the timing difference between the synchronization sources is within a predetermined allowable value, the synchronization sources may be regarded as being identical to each other, and the predetermined allowable value may be configured for each numerology or each frequency range (FR). With this configuration, the user equipment 20 can select the synchronization source in accordance with different signal characteristics by configuring the allowable value to be applied to the timing difference between the synchronization sources based on the numerology or the FR.

The receiving unit may receive information indicating a synchronization source used by another user equipment, and when the synchronization source used by the other user equipment coincides with any one of synchronization sources available to the user equipment, the control unit may join a group to which the other user equipment belongs. With this configuration, when the user equipment 20 is not participating in the group, the user equipment 20 can join the group using a synchronization source available to its own device.

The receiving unit may receive information indicating a synchronization source used by another user equipment, and when the synchronization source used by the other user equipment coincides with the synchronization source used by the user equipment, the control unit may cause the other user equipment to join a group to which the user equipment belongs. With this configuration, when the user equipment 20 participates in the group, the user equipment 20 can cause another user equipment to join the group using the same synchronization source as the synchronization source used by another user equipment 20.

According to an embodiment of the present invention, provided is a base station device including a receiving unit that receives information indicating one or more synchronization sources available for D2D direct communication from a user equipment, a control unit that determines a group and a synchronization source to be applied to the user equipment on the basis of the information indicating the one or more synchronization sources, and a transmitting unit that transmits the information indicating the determined group and the synchronization source to the user equipment.

With the above configuration, the user equipment 20 can select an appropriate synchronization source within a group and form a group. In other words, a plurality of user equipments can select an appropriate synchronization source and form a group in the D2D direct communication.

### (Supplement of embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station device 10 and the user equipment 20 have been described using the functional block diagrams, but such devices may be implemented by hardware, software, or a combination thereof. Software executed by the processor included in the base station device 10 according to the embodiment of the present invention and software executed by the processor included in the user equipment 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Further, a notification of information is not limited to the aspect or embodiment described in the present disclosure and may be given by any other method. For example, the notification of information may be given by physical layer signaling (for example, downlink control information (DCI) or uplink control information (UCI)), upper layer signaling (for example, radio resource control (RRC) signaling, medium access control (MAC) signaling, broadcast information (master information block (MIB), system information block (SIB)), other signals, or a combination thereof. Further, the RRC signaling may be referred to as an RRC message and may be, for example, an RRC connection setup message, an RRC connection reconfiguration message, or the like.

Each aspect and embodiment of the present invention may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, and next generation systems extended on the basis of these standards. Further, a plurality of systems may be combined and applied (for example, a combination of at least one of LTE and LTE-A and 5G or the like).

The processing procedures, the sequences, the flowcharts, and the like of the respective aspects/embodiments described in this specification may be reversed in order unless there is a contradiction. For example, the method described in the present disclosure presents elements of various steps using an exemplary order and is not limited to a presented specific order.

In this specification, a specific action that is supposed to be performed by the base station device 10 may be performed by an upper node in some cases. In the network including one or more network nodes including the base station device 10, various operations performed for communication with the user equipment 20 can be obviously performed by at least one of the base station and any network node (for example, an MME, an S-GW, or the like is considered, but it is not limited thereto) other than the base station device 10 and/or the base station device 10. The example in which the number of network nodes excluding the base station device 10 is one has been described above, but other network nodes in which a plurality of other network nodes (for example, an MME and an S-GW) are combined may be provided.

Information, a signal, or the like described in the present disclosure may be output from an upper layer (or a lower layer) to a lower layer (or an upper layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in this specification may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or an arbitrary combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names allocated to the various channels and the information elements are not limited in any respect.

In the present disclosure, the terms "base station (BS)," "radio base station," "base station device," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base stations may also be indicated by terms such as a macrocell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, It may also be referred to as a remote terminal, handset, user agent, mobile client, client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The moving body may be a vehicle (for example, a car, an airplane, or the like), a moving body that moves unmanned (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the user terminal is replaced with communication between a plurality of user equipments 20 (for example, which may be referred to as device-to-device (D2D) or vehicle-to-everything (V2X)). In this case, the user equipment 20 may have the functions of the base station described above. Further, the terms "uplink" and "downlink" may be replaced with terms (for example, "side") corresponding to inter-terminal communication. For example, an uplink channel, a downlink channel, or the like may be read with side channels.

Similarly, the user terminal in the present disclosure may be replaced with the base station. In this case, the base station may have the functions of the above-mentioned user terminal.

The term "determining" used in this specification may include a wide variety of actions. For example, "determining" may include, for example, events in which events such as judging, calculating, computing, processing, deriving, investigating, looking up, search, and inquiry (for example, looking up in a table, a database, or another data structure), or ascertaining are regarded as "determining." Further, "determining" may include, for example, events in which events such as receiving (for example, receiving information), transmitting (for example, transmitting information), input, output, or accessing (for example, accessing data in a memory) are regarded as "determining." Further, "determining" may include, for example, events in which events such as resolving, selecting, choosing, establishing, or comparing are regarded as "determining." In other words, "determining" may include events in which a certain operation is regarded as "determining." Further, "determining" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS and may be referred to as a pilot, depending on a standard to be applied.

A phrase "on the basis of" used in the present disclosure is not limited to "on the basis of only" unless otherwise stated. In other words, a phrase "on the basis of" means both "on the basis of only" and "on the basis of at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Further, "means" in the configuration of each of the above devices may be replaced with "unit," "circuit," "device," or the like.

In a case in which "include," "including," and variations thereof are used in the present disclosure, these terms are intended to be comprehensive, similarly to a term "equipped with (comprising)." Further, the term "or" used in the present disclosure is intended not to be an exclusive disjunction.

A radio frame may include one or more frames in the time domain. In the time domain, each of one or more frames may be referred to as a sub frame. The sub frame may further include one or more slots in the time domain. The sub frame may have a fixed time length (for example, 1 ms) not depending on numerology.

The numerology may be a communication parameter applied to at least one of transmission and reception of a certain signal or channel. For example, the numerology may indicate at least one of a sub carrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (orthogonal frequency division multiplexing (OFDM) symbols, single carrier frequency division multiple access (SC-FDMA) symbols, or the like) in the time domain. The slot may be a time unit based on the numerology.

The slot may include a plurality of mini slots. Each mini slot may include one or more symbols in the time domain. Further, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a sub frame, a slot, a mini slot, and a symbol indicates a time unit for transmitting a signal. As a radio frame, a sub frame, a slot, a mini slot, and a symbol, different designations respectively corresponding to them may be used.

For example, one sub frame may be referred to as a transmission time interval (TTI: Transmission Time Interval), or a plurality of consecutive sub frames may be referred to as TTIs, or one slot or one mini slot may be referred to as a TTI. In other words, at least one of the sub frame and the TTI may be a sub frame (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the sub frame.

Here, for example, the TTI refers to a minimum time unit of scheduling in wireless communication. For example, in the LTE system, the base station performs scheduling of allocating a radio resource (a frequency bandwidth, a transmission power, or the like which can be used in each user equipment 20) to each user equipment 20 in units of TTIs. The definition of the TTI is not limited thereto.

The TTI may be a transmission time unit such as a channel coded data packet (transport block), a code block, or a code word, or may be a processing unit such as scheduling or link adaptation. Further, when a TTI is given, a time interval (for example, the number of symbols) in which a transport block, a code block, a code word, or the like is actually mapped may be shorter than the TTI.

Further, when one slot or one mini slot is referred to as a TTI, one or more TTIs (that is, one or more slots or one or more mini slots) may be a minimum time unit of scheduling. Further, the number of slots (the number of mini slots) constituting the minimum time unit of scheduling may be controlled.

A TTI having a time length of 1 ms may be referred to as a common TTI (TTI in LTE Rel. 8 to 12), a normal TTI, a long TTI, a common sub frame, a normal sub frame, a long sub frame, a slot, or the like. A TTI shorter than the common TTI may be referred to as a reduced TTI, a short TTI, a partial TTI (a partial or fractional TTI), a reduced sub frame, a short sub frame, a mini slot, a sub slot, a slot, or the like.

Further, a long TTI (for example, a common TTI, a sub frame, or the like) may be replaced with a TTI having a time length exceeding 1 ms, and a short TTI (for example, a reduced TTI or the like) may be replaced with a TTI having a TTI length which is less than a TTI length of a long TTI and equal to or more than 1 ms.

The resource block (RB) is a resource allocation unit in the time domain and the frequency domain and may include one or more consecutive subcarriers in the frequency domain. The number of sub carriers included in an RB may be the same irrespective of a numerology and may be, for example, 12. The number of sub carriers included in an RB may be determined on the basis of a numerology.

Further, a time domain of an RB may include one or more symbols and may be a length of one slot, one mini slot, one sub frame, or one TTI. Each of one TTI, one sub frame, or the like may be constituted by one or more resource blocks.

Further, one or more RBs may be referred to as a physical resource block (PRB), a sub carrier group (SCG), a resource element group (REG), a PRB pair, or the like.

Further, the resource block may be constituted by one or more resource elements (RE). For example, one RE may be a radio resource region of one subcarrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and it may not be assumed that the UE transmits and receives a predetermined signal/channel outside an active BWP. Further, a "cell," a "carrier," or the like in the present disclosure may be replaced with a "BWP."

Structures of the radio frame, the sub frame, slot, the mini slot, and the symbol are merely examples. For example, configurations such as the number of sub frames included in a radio frame, the number of slots per sub frame or radio frame, the number of mini slots included in a slot, the number of symbols and RBs included in a slot or a mini slot, the number of sub carriers included in an RB, the number of symbols in a TTI, a symbol length, a cyclic prefix (CP) length, and the like can be variously changed.

In the entire present disclosure, for example, when an article such as "a," "an," or "the" in English is added by a translation, the present disclosure may include a case in which a noun following the article is the plural.

In the present disclosure, a term "A and B are different" may mean "A and B are different from each other." Further, the term may mean "each of A and B is different from C." Terms such as "separated," "coupled," or the like may also be interpreted in similarly to "different."

Each aspect/embodiment described in this specification may be used alone, in combination, or may be switched in accordance with the execution. Further, notification of predetermined information (for example, notification of "being X") is not limited to being performed explicitly, but is performed by implicit (for example, not notifying the predetermined information) It is also good.

Although the present disclosure has been described above in detail, it is obvious to those skilled in the art that the present disclosure is not limited to the embodiments described in the present disclosure. The present disclosure may be implemented as revised and modified forms without departing from the gist and scope of the present disclosure as configured forth in claims. Therefore, the description of the present disclosure is for the purpose of illustration and does not have any restrictive meaning to the present disclosure.

### EXPLANATIONS OF LETTERS OR NUMERALS

- 10: BASE STATION DEVICE
- 110: TRANSMITTING UNIT
- 120: RECEIVING UNIT
- 130: SETTING UNIT
- 140: CONTROL UNIT
- 20: USER EQUIPMENT
- 210: TRANSMITTING UNIT
- 220: RECEIVING UNIT
- 230: SETTING UNIT
- 240: CONTROL UNIT
- 30: NAVIGATION SATELLITE
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A user equipment, comprising:
a transmitting unit that transmits information related to one or more synchronization sources available for terminal-to-terminal direct communication to a base station device;
a receiving unit that receives information indicating a group and a synchronization source based on the information related to the one or more synchronization sources from the base station device; and
a control unit that executes the terminal-to-terminal direct communication in the received group using the received synchronization source.

2. The user equipment according to claim 1, wherein the information related to the one or more synchronization sources includes a reception strength or a reception quality of the synchronization source or a timing difference between the synchronization sources.

3. The user equipment according to claim 2, wherein, when the timing difference between the synchronization sources is within a predetermined allowable value, the synchronization sources are regarded as being identical to each other, and the predetermined allowable value is configured for each numerology or each frequency range (FR).

4. The user equipment according to claim 1, wherein the receiving unit receives information indicating a synchronization source used by another user equipment, and
when the synchronization source used by the other user equipment coincides with any one of synchronization sources available to the user equipment, the control unit joins a group to which the other user equipment belongs.

5. The user equipment according to claim 1, wherein the receiving unit receives information indicating a synchronization source used by another user equipment, and
when the synchronization source used by the other user equipment coincides with the synchronization source used by the user equipment, the control unit causes the other user equipment to join a group to which the user equipment belongs.

6. A base station device, comprising:
a receiving unit that receives information indicating one or more synchronization sources available for terminal-to-terminal direct communication from a user equipment;
a control unit that determines a group and a synchronization source to be applied to the user equipment on the basis of the information indicating the one or more synchronization sources; and
a transmitting unit that transmits the information indicating the determined group and the synchronization source to the user equipment.
